# EUROPEAN PATENT APPLICATION

(11) **EP 1 598 763 A1**
(43) Date of publication of application: **23.11.2005**
(21) Application number: 05103667.1
(22) Date of filing: 03.05.2005
(51) Int. Cl.: G06F 17/60

(54) **System and method for communicating product information**

(30) Priority: 17.05.2004 US 571716; 31.08.2004 US 930317
(71) Applicant: MICROSOFT CORPORATION, Redmond, WA 98052 (US)
(72) Inventor: Kelly, Andrew James, Redmond, WA 98052 (US); Sands, Ian Michael, Redmond, WA 98052 (US); Russ, Victor Kevin, Redmond, WA 98052 (US)
(74) Representative: Zimmer, Franz-Josef

(57) **Abstract**

A system and method for empowering consumers in a retail environment. Among many other features, the present invention provides a number of menu and item list features to enhance a shopper's experience in a retail environment. In addition, the invention provides an item-level location mapping feature. By the use of the user's shopping list and a database storing information describing the location of items on the list, the system dynamically generates routing maps that show a path the user can take to locate the items on the list. The display may include a map with a route graphically displayed on the map, and/or a text description of the route.

## Description

### CROSS-REFERENCE TO RELATED APPLICATION(S)

This application claims the benefit of U.S. Provisional Application No. 60/571,716, entitled "SYSTEM AND METHOD FOR COMMUNICATING PRODUCT INFORMATION" and filed on May 17, 2004, which is hereby incorporated by reference.

### TECHNICAL FIELD

The present invention relates to e-commerce systems, and in particular, to a method and system for enhancing the communication of retail and product information.

### BACKGROUND

In the retail industry, there is a continual need for effective and timely communication. In response to this need, there have been many improvements to the Internet and e commerce systems to better communication between retailers and consumers. While electronic commerce has improved the way consumers shop for products and services, existing systems still have many limitations. For instance, existing systems are limited to communicating specific types of information that limit consumers to certain functions, such as receiving general product information and purchasing products via a standard purchase and mail model.

In view of the above-described limitations, e-commerce systems are not generally helpful to consumers shopping in a retail store. For example, even if a consumer has access to an Internet-based computer system while shopping in a store, he or she still faces the task of locating each desired product in the store. The task of locating products is more problematic in large warehouse or multi-department stores. In some circumstances, these drawbacks, and many other limitations of the prior art systems, prevent consumers from obtaining a positive shopping experience.

As will be readily understood from the foregoing, there is a need for a system and method that improves a consumers experience while shopping in a retail store. More specifically, there exists a need for a system and method that improves communication of different types of product information.

### BRIEF DESCRIPTION OF THE DRAWINGS

Many aspects and advantages of this invention will become more readily appreciated as the same become better understood by reference to the following detailed description, when taken in conjunction with the accompanying drawings, wherein:
FIGURE 1 is a simplified block diagram of a number of computers connected to a network, including a number of client computers and a server for allowing a number of users to communicate via client-server software applications;
FIGURE 2 is a schematic block diagram of an exemplary embodiment of the server depicted in FIGURE 1;
FIGURE 3 is a schematic block diagram of an exemplary embodiment of one of the client computers depicted in FIGURE 1;
FIGURE 4 is a flow diagram illustrating one embodiment of a method for processing product information in accordance with the present invention;
FIGURE 5 is a pictorial diagram illustrating one exemplary graphical user interface according to the present invention for displaying a list of items; and
FIGURE 6 is a pictorial diagram illustrating one exemplary graphical user interface according to the present invention for displaying a routing map.

### DETAILED DESCRIPTION

The present invention provides a number of system functions and end user features that empower consumers in a retail environment. In addition, the present invention provides mechanisms that allow retailers to leverage consumer devices that improve consumers' shopping experience. In one embodiment, the invention provides an item-level location mapping feature. As will be described in more detail below, this embodiment allows a user to store and maintain shopping lists. By the use of the user's shopping list and a database storing information describing the location of items on the list, the system dynamically generates routing maps that show a path the user can take to locate the items on the list. The display may include a map with a route graphically displayed on the map, and/or a text description of the route. This invention has potential to save users significant amounts of time in their shopping experience by efficiently directing them through a store. It also will allow retailers to provide better customer services without increasing staff, exemplified through enhanced find-item functionality. As will be described in more detail below, the present invention also provides many other menu and list features to enhance a shopper's experience in a retail environment.

The following description of the present invention first provides an overview of a sample computer system in which the present invention may be implemented. Following that, a description of a method for communicating product information on a graphical user interface shown in accompanying flow diagrams is described. In addition, the following description summarizes several methods for dynamically updating routing maps and item lists. The illustrative examples described herein are not intended to be exhaustive or to limit the invention to the precise forms disclosed. Similarly, any process steps described herein may be interchangeable with other steps, or several combinations of steps, in order to achieve the same result.

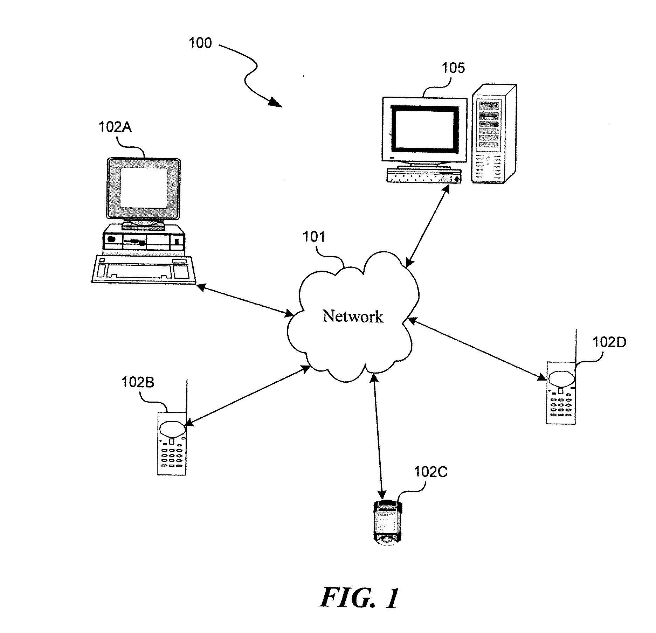

Referring to FIGURE 1, the following description is intended to provide an exemplary overview of one suitable computer system 100 in which the invention may be implemented. The illustrated computer system 100 comprises a plurality of devices 102A, 102B, 102C, 102D configured to electronically communicate with a server 105 via a network 101. The devices are configured with a component for capturing an image. The server 105 may be a computer that is associated with a store that provides goods and/or services to others, whether retail, wholesale or otherwise, or any other entity that provides information about goods and services available to consumers. The network 101 may be a local area network (LAN) or a larger network, such as a wide area network (WAN) or the Internet. In FIGURE 1, the devices are illustrated as computers 102A and 102C, and mobile telephones 102B and 102D. However, the devices 102A, 102B, 102C, 102D shown in FIGURE 1 may take the form of any one of a number of different computer products that includes appropriate hardware and software components for running an operating system, displaying text and images, and in some cases for capturing an image. For example, the device may also be a digital camera, a two way pager, or any other computer-type device. The devices may be associated with a user of the computer system 100, such as a consumer. Obviously, these devices should be considered as exemplary and not limiting. As will also be appreciated by those skilled in the art, the computer system 100 shown in FIGURE 1 is a simplified example of one suitable system for implementing the present invention. The present invention is not limited to this type of system.

As will be described in more detail below, a consumer can use the computer system 100 to enter or modify a list of selected items, transmit data describing the selected items and then receive and display data that shows a location of the selected items, a route between the selected items and/or a dynamically updated list of selected items. In addition, the computer system 100 can be used to communicate and display any text or image of information related to the selected items. This may allow users to receive information that allows users to compare prices, read reviews about the selected items, and/or read information on related items or other suggested items.

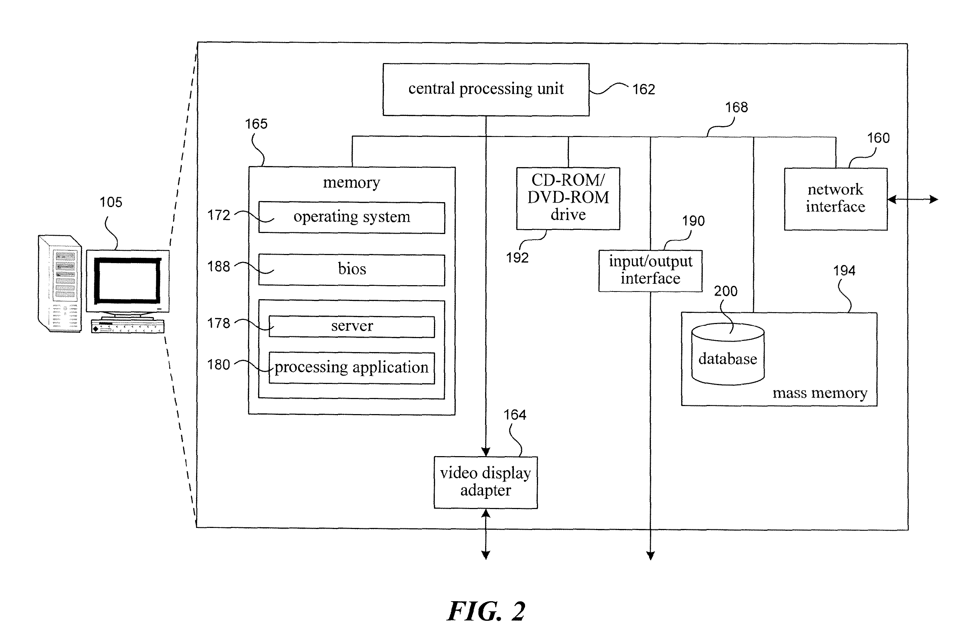

The various hardware and software components of the server 105 and the devices 102A, 102B, 102C and 102D that are used to receive, store, and process the previously described data will now be discussed in more detail. FIGURE 2 depicts an exemplary computer architecture of the server 105 shown in FIGURE 1. Those skilled in the art will appreciate that the server 105 may include many more or fewer components than those shown in FIGURE 2. However, it is not necessary that all of these generally conventional components be shown in order to disclose an enabling embodiment of the present invention. As shown in FIGURE 2, the server 105 is connected to the network 101 (FIGURE 1) via a network interface 160. The network interface 160 includes the necessary hardware and software for allowing the server 105 to communicate with other computers connected to the network by the use of one or more suitable communication protocols, such as the TCP/IP protocol.

The server 105 also includes a processing unit 162, a video display adapter 164, and memory 166, all connected together and to the network interface 160 by a bus 168. The memory 166 generally comprises RAM, ROM, and permanent memory, such as a hard disk drive, tape drive, optical drive, floppy disk drive, or combination thereof. The memory 166 stores an operating system 172 for controlling the operation of the server 105. As is known to those skilled in the art, the operating system may be formed by a general purpose server operating system such as a Microsoft® server operating system, UNIX, or LINUX™. A binary input/output system ("BIOS") 188 for controlling the low-level operation of server 105 is also stored in the memory 166.

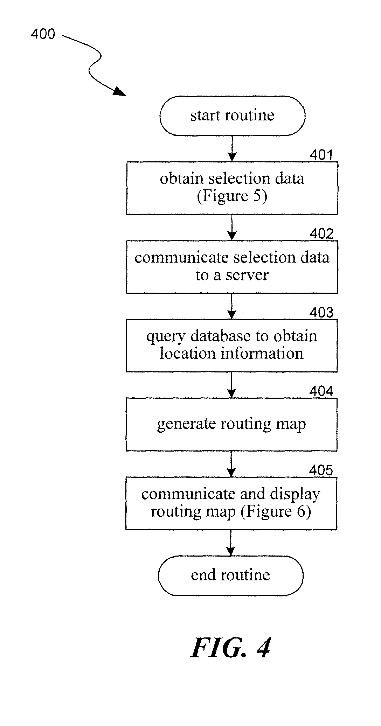

The memory 166 may also store program code and data for providing a network site that allow users to request, receive, and view information and data files stored in the server 105. Thus, the memory 166 may store a general data sharing application, such as a server application 178 that may be any one of a number of commercially available software packages. The server application 178 comprises computer executable instructions that, when executed by the server 105, communicate configurable markup documents, programs and/or scripts that produce dynamically updated displays, such as the sample displays shown in FIGURES 4-5, which are described in more detail below. The memory 166 also stores other software components, such as a processing application 180, to facilitate various functions of the present invention. As will be described in more detail below, the processing application 180 is configured to receive data from devices, query a database for item information and communicate database query results to the devices.

The server 105 may also include an input/output interface 190 connected to the bus 168 for communicating with external devices, such as a mouse, keyboard, scanner, or other input devices not shown in FIGURE 2. Likewise, the server 105 may further include additional mass storage facilities, such as CD-ROM/DVD-ROM drive 192, and large capacity mass memory 194, also connected to the bus 168. The mass memory 194 may be utilized by the server 105 to store several databases. In particular, the mass memory 194 may store a database 200 for use by the processing application 180. As will be appreciated by those skilled in the art, the database 200 may be configured to contain data in any one of a number of formats suitable for storing information related to commerce items. For instance, the database 200 may be configured to store item information describing the price of an item, the availability of an item, or any other like data. Such a database may also store or have access to data such as a Usenet forum, other product databases and or any search engine database. Although this illustration includes examples of specific software applications and databases, this illustration should be taken as exemplary and not limiting.

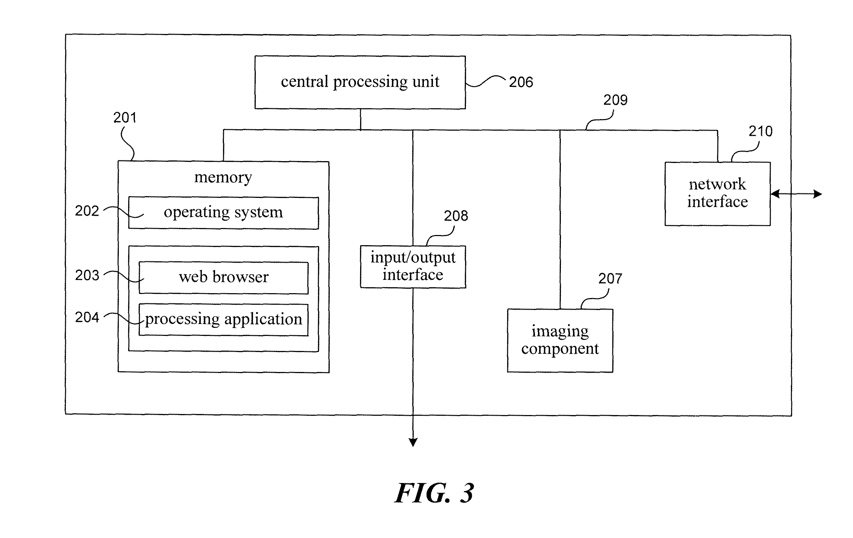

As will be appreciated by those skilled in the art, the architecture of the devices 102A, 102B, 102C, 102D may take on any suitable form, such as the architecture illustrated in FIGURE 3, if appropriate. For example, a device may include a network interface 210 for providing communication with the network 101. The network interface 210 may be configured for use with any wired or wireless network connection, and may be used with any suitable communication protocol, such as the TCP/IP protocol. In general, the device includes a central processing unit 206, an input/output interface 208 and memory 201, all connected together and to the network interface 210 by a bus 209. The memory 201 stores the program code, such as an operating system 202, necessary for operating the device and for generating an interface, such as a graphical user interface (GUI) on a display of the device. In one specific embodiment, the operating system 202 may include the Microsoft Smartphone platform. The memory 201 may also store a Web browser application 203, such as Microsoft Internet Explorer®, for browsing Web pages generated by remote servers, such as server 105.

The devices 102A, 102B, 102C, 102D may also, as an option, include an imaging component 207, such as a charge coupled device (CCD) or any other circuit suitable for capturing an image. A circuit suitable for capturing an image of an item identifier, such as a barcode or text information, may be considered as a suitable imaging component 207. Portable electronics with imaging components are presently known and understood in the art of image capture and communication. The device further comprise one or more input/output devices 208, which may include a display, a speaker, or any other device for communicating information. Accordingly, the device may also contain software components, such as a processing application 204, for converting electronic signals into audible signals suitable for communicating information through a speaker.

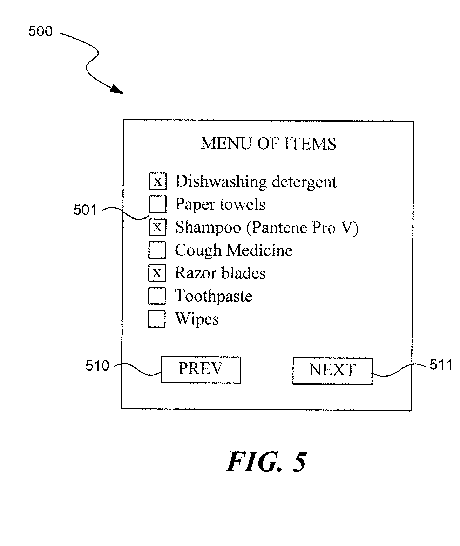

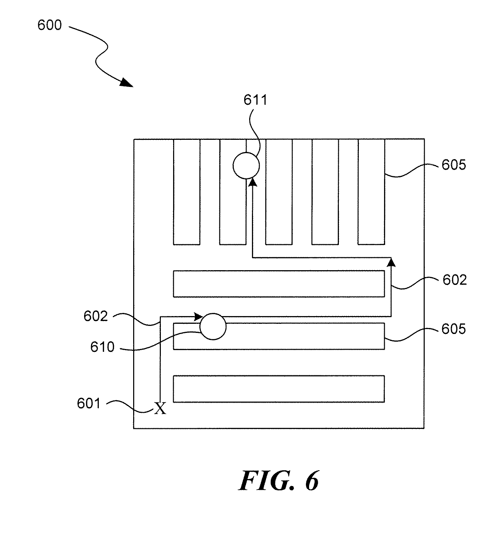

Referring now to the flow diagram of FIGURE 4 and the pictorial diagrams of FIGURES 5 and 6, one sample embodiment of an information processing method 400 will now be described. In this description, the information processing method 400 communicates information related to selected items and then generates, communicates and displays a routing map that enables a user to locate the selected items. The information processing method 400 begins at block 401, where the method obtains selection data from a client device. In one embodiment, the selection data can be a list of items selected by a user, via a graphical user interface.

FIGURE 5 is one example of a graphical user interface, which is referred to as an item interface 500, suitable for displaying an item list 501. As will be appreciated by one of ordinary skill in the art, the item interface 500 may be a display on any one of the devices (FIGURE 1) by the use of any application, such as a Web browser or the like. In the sample shown in FIGURE 5, the item list 501 lists a number of products: Dishwashing detergent, Paper towels, Shampoo (Pantene Pro V), Cough Medicine, Razor blades, Toothpaste, Wipes, etc. The item interface 500 also provides a mechanism that allows a user to select one or more of the listed items, such as a button or check box. In this example, the Dishwashing detergent, Shampoo and Razor blades are selected items.

As will be appreciated by one of ordinary skill in the art, the item list 501 may be created by the user or it may be preconfigured by a server that is configured to suggest items suitable for the user. For example, the item list 501 may be configured into an "active list," which stores items most actively selected items. In another configuration, the item list 501 may be made from a "favorites list," which is predetermined by a user or computer program. In yet another embodiment, the item list 501 may come from a "wish list," "shopping cart" or any other type of user or computer configured list. Also shown, the item interface 500 may be configured with additional control mechanisms, such as a "next" button 511 and a "previous" button 510 that allows a user to access other batches of listed items.

Returning to FIGURE 4, after the device obtains the selection data, the information processing method 400 continues to block 402 where the selection data is communicated to a server, e.g., server 105. In the process of block 303, depending on the type of device, the communication of the image from the device to the server may be executed by one of a number of different communication networks. In several non-limiting examples, the communication between the device and the server may include the use of a public switched telephone network ("PSTN"), wired digital data networks, such as the Internet, or a local area network ("LAN"), etc. Examples of suitable wireless communications media/methods include, but are not limited to, wireless telephony ("cellular") including analog cellular, digital personal communications service ("PCS"), short message service ("SMS"), and wireless application protocol ("WAP"). Other suitable wireless communication media/methods include, but are not limited to, wireless digital data networks, such as 802.11 wireless LAN ("WLAN"), two-way paging networks, specialized mobile radio systems, infrared, and ISM-service communications links, such as Bluetooth. Further, some communication methods, either wired or wireless, include Internet protocol ("IP") addressing. One skilled in the relevant art will appreciate that additional or alternative, wired or wireless, communication media/methods may be practiced and are considered within the scope of the present invention.

Once the selection data is communicated to the server 105, the method proceeds to block 403 where the selection data is used to query a database, such as the database 200 shown in FIGURE 2. In one embodiment, the selection data is incorporated in a standard database query and sent to the database 200 to obtain location, price and/or other information about the selected item, which is referred to herein as "item information." In the present example, the selection data may contain UPC data identifying the Dishwashing detergent, Shampoo and Razor blades. Those skilled in the art will recognize that virtually any type or quantity of information relating to the selected items may be obtained by the use of the above-described query. Non-limiting examples of item information that may be obtained in a database query include location, price, availability, safety or recall information, recommendations, reviews, etc.

Once the item information is obtained, the information processing method 400 proceeds to block 404, where the item information is used to generate a routing map. Generally described, a routing map may show a map of a store or map to a number of different stores. The map may also contain a graphical representation, such as a line, that shows a user of a route to follow to find each selected item. A routing map may be in the form of one of a number maps or text descriptions.

The routing map may be generated by any known pathfinding algorithms. For instance, Dijkstra's algorithm or a derivative of Dijkstra's algorithm may be used to find the shortest path between the selected items. Details of such algorithms can be found at the cites http://theory.stanford.edu/~amitp/GameProgramming/AStarComparison.html and http://www.gamasutra.com/features/20010314/pinter_01.htm, the subject matter of which is specifically incorporated by reference. As also can be appreciated by those skilled in the art, modifications can be made to any algorithm so that users of the system are routed by desired locations of a retail store. For instance, the system may analyze the user's list, such as the favorites list, and then draw a route that guides the user to walk by those listed products in the store. Alternatively, or in conjunction with such a feature, the system may draw a route through designated locations to feature other items, such as a sale item in front of a store, a demo in a particular department, etc. Any routing map or pathfinding or routing algorithm may be used to implement this part of the method.

Once the routing map is generated, the information processing method 400 proceeds to block 405 where the routing map is communicated to and displayed on the device. Those skilled in the art will appreciate that any suitable communication protocol, such as those described above, may be utilized for communicating the routing map from the server 105 to the device. It is also to be appreciated that the item information retrieved by the database query (block 403) may also be communicated from the server 105 to the device.

FIGURE 6 is one example of a graphical user interface displaying a sample routing map. With reference again to the above-described example, routing map may have a graphical representation of a route 602, an identifier showing a user's location 601, a map of roads or a map of a store floor layout 605 and identifiers showing the selected items 610 and 611. As will be appreciated by those skilled in the art, any general display feature can be used to enhance a users experience in viewing the routing map, such as a map zooming feature, a scrolling feature, etc. Returning to FIGURE 4, after the processing of block 405, the method 400 terminates or loops through other versions of the method to dynamically update the routing map. Various embodiments of other methods for dynamically updating the routing map are described below.

In one embodiment, a routing map may be dynamically generated or updated by the use of information describing the user's location. In this embodiment, information describing the user's location may be updated by a real-time system such as a GPS system, wireless tracking system, or the like. Examples of wireless tracking systems are described in more detail in a commonly assigned patent applications: "Systems and Methods for Locating Mobile Computer Users in a Wireless Network," filed on 01/12/2001, having an Application Number 09/760,180; and "Information Management and Processing in a Wireless Network," filed on 01/19/2001, having an Application Number 09/766,505. The subject matter of said applications is specifically incorporated herein by reference.

Once the user's location information is obtained by the system or the device, the system can update the route on the map to show the user's location relative to other selected items. In addition, an updated map may identify a product that is close to the user's location, pop-up an ad related to the product, play a video feed providing information related to the product, or perform a number of other functions. In another example, the system can examine the user's favorite list or any other list stored on the user's device, and then generate a signal to let the user know that he or she is located near an item on one or more of the stored lists. In yet another example, the user may randomly select a particular item on a list and command his or her device to draw a direct route to the particular item. These embodiments may utilize the above mentioned database, pathfinding algorithms and user location mechanisms. In summary, the system is capable of providing any type of information, in any format, regarding a product that is close to the user.

In addition to displaying a routing map or text describing a route between items, the system can be configured to display other types of information for enhancing a shopper's experience. For example, among other types of information, the system may display inventory information, price information, comparison price information, customer review information, discount information, cross-sale information, cross-promotion information or any other type of information related to an item. In other examples, the system may display gift suggestions or other suggestions that are based on the users past shopping patterns. The system may obtain such information in a database query such as the database query described above. In addition to, or as an alternative to, displaying the routing map and/or other item information, the communicated information can be converted to a signal suitable for audibly communicating the information to the user.

In a specific example, the system may be configured to determine if a user is standing near, i.e., within a few feet, a particular item, such as cough medicine. By obtaining the user's location information from the device, and other data describing the location of the cough medicine, the system can automatically communicate information related to cough medicine, e.g., a pharmacist's suggestion related to the cough medicine or the like. This communicated information may be in the form of text or a video/audio feed. Alternatively, or in addition to providing the audio/feed, the system may provide contact information for a category/product specialist or another business entity.

In another embodiment, the system utilizes a user's location information to dynamically update a list of items, such as a favorites list. In one implementation, the system determines if a user is near or in a particular store. Once it is determined that the user is near or located in the store, the system will query the store's database to determine if the items have a certain status, e.g., the items are in are in stock. The system may then alert the user of item level status suggesting alternative items from the store's database if user preferred items are not in stock. The system may also highlight items that are in stock. In other embodiments, user lists may be updated in response to one or more user actions. For example, items on a shopping list or favorites list may be removed or checked off as the user places the items in a virtual shopping basket. In another example, the system highlights or updates particular items on a list when the user comes within a predetermined distance from the particular item.

In yet another example of an embodiment having a dynamically updated list, the system reorders a list of items depending on the status of each item. In such an embodiment, the system may determine the location of the user and the location of each listed item and then reorder the user's list depending on the distance between the user and each item. In other examples, a list of items may be reordered or sorted if the system determines that certain items are in stock or if the system determines if items are marked with a certain status, i.e., that a particular item is on sale or marked for promotion. The status of each item may be retrieved from an item database such as the database 200 shown in FIGURE 2.

In addition to providing dynamically updated lists, the system may display price totals and price savings information to users. In such an embodiment, the system may also provide an automatic checkout system that allows users to add items to a virtual shopping cart and then execute a transaction to purchase the selected items. Among other features, the system can update a price total by adding a price of a particular item as the user adds the particular item to a virtual shopping cart. It will be appreciated that the price of a particular item may be added to a price total in response to other types of actions. For instance, the price of a particular item may be added to a running total when the user picks up the particular item. In combination with all or some of the above-mentioned features, the system can provide all of the necessary hardware and software components to facilitate a purchase of the select items via the device, including transactional software that permits a monetary or credit transfer from the user to any other user, store or entity selling products or services. In such an embodiment, a transaction may be executed in response to a number of actions. For instance, a transaction may be initiated by the user or it may be automatically executed when the user walks through the door of a store or through another designated location.

In another embodiment, which can be used in conjunction with or separate from the above-described embodiments, a device of the system (100 of FIGURE 1) can be used to collect data by the use of a camera or other imaging component, and request information that is related to an item. For example, one may use the camera of a mobile phone to capture an image of a barcode associated with an item. By use of the processor of the device or by the processor of a server, the captured image is converted to an item identifier, such as a bar code or UPC. The item identifier is then used to query a database, such as database 200, to obtain information related to the item, such as information describing the item's location, price, user review, newsgroups, web logs, etc. Embodiments of the present invention may also utilize other systems for obtaining information. For instance, embodiments of the present invention may use systems and methods disclosed in a commonly assigned patent application: " Wireless Programmable User Interaction System With Machine-Readable Tags For Physical Objects," filed on 06/27/2003, having an Application Number 10/608240. The subject matter of said application is specifically incorporated herein by reference. The obtained information, such as the obtained product information described above, is then communicated back to the mobile phone and displayed or played back to a user via a text, GUI, video or audio feed.

In an example system and method of the image processing embodiment, the image may include any type of image format suitable to communicate a bar code, a text message, or even the general shape of an item. Once the captured image stored in the device, the image data is then communicated to the server 105 by the use of any available communications mechanism, such as those described above. After the image data is communicated to the server, or in some embodiments, prior to the communication to the server, the image data is converted into a code that identifies the product. For example, an image to text conversion may take place on the device or on the server 105. To implement this step, any one of a number of existing programs may be used, such as an optical character recognition (OCR) program or a barcode interpreting program. Once the image is converted to a product identifying code, such as UPC, the code is used to query for information related to the product. Product information is retrieved from one or more sources, such as an on-line service, and then communicated back to the device. Retrieved product information can include, but is not limited to, video and/or audio feeds describing a product, information or images from a Usenet forum, inventory information, etc.

While the foregoing description makes reference to preferred embodiments, the scope of the invention is defined solely by the claims that follow and the elements recited therein.

The embodiments of the invention in which an exclusive property or privilege is claimed are defined as follows:

## Claims

1. A method for communicating information of commerce items, the method comprising:
obtaining data identifying a plurality of selected items, wherein the data is obtained from a wireless device;
obtaining location information associated with the plurality of selected items;
generating mapping data describing a route between at least two individual items of said plurality of selected items;
communicating the mapping data to the wireless device.

2. The method of Claim 1, wherein the method further comprises:
obtaining price information associated with the plurality of selected items; and
communicating the price information to the wireless device.

3. The method of Claim 1, wherein the method further comprises:
obtaining inventory information associated with the plurality of selected items; and
communicating the inventory information to the wireless device.

4. The method of Claim 3, wherein the data identifying a plurality of selected items is generated from a user-configured favorites list, and wherein the method further comprises, removing an individual item from the user-configured favorites list if the inventory information indicates that the individual item is not available.

5. The method of Claim 1, wherein the method further comprises:
obtaining availability information associated with the plurality of selected items; and
communicating the availability information to the wireless device.

6. The method of Claim 5, wherein the data identifying a plurality of selected items is generated from a user-configured favorites list, and wherein the method further comprises, removing an individual item from the user-configured favorites list if the availability information indicates that the individual item is not available.

7. The method of Claim 1, wherein obtaining data identifying a plurality of selected items, comprises:
receiving image data, wherein the image data contains an image of at least one product identifier;
processing the image data to obtain the product identifier from the image data; and
producing data identifying a plurality of selected items, wherein the data includes the obtained product identifier.

8. The method of Claim 1,
wherein obtaining location information, comprises,
querying a database for location information related to an individual item of said plurality of selected items;
in response to the query, obtaining the location information, wherein the location information describes a location of the individual item relative a floor map;
and wherein the mapping data describes the location of the individual item relative to the floor map.

9. The method of Claim 8, further comprising, obtaining location data describing a location of the wireless device, wherein the mapping data describes a graphical route between the location of wireless device and the location of the individual item.

10. The method of Claim 9, wherein the mapping data is dynamically updated as the location of the wireless device changes.

11. The method of Claim 1, wherein the wireless device is a mobile phone having components for displaying an image of the mapping data.

12. A computer-readable medium containing computer-readable instructions which, when executed by a computer, performs the method of Claim 1.

13. A computer-controlled system for performing the method of Claim 1.

14. A method for obtaining mapping information of commerce items, the method comprising:
sending selection data identifying a plurality of selected items, wherein the data is sent from a wireless device to a server;
receiving mapping data describing a route between at least two individual items of said plurality of selected items, wherein the mapping data is based on the items described in the selection data, and wherein the mapping data is sent from the server to the wireless device.

15. The method of Claim 14, wherein the mapping data further comprises price information associated with the plurality of selected items.

16. The method of Claim 14, wherein the mapping data further comprises inventory information associated with the plurality of selected items.

17. The method of Claim 16, wherein the data identifying a plurality of selected items is generated from a user-configured favorites list, and wherein the method further comprises, dynamically removing an individual item from the user-configured favorites list if the inventory information indicates that the individual item is not available.

18. The method of Claim 14, wherein the mapping data further comprises availability information associated with the plurality of selected items.

19. The method of Claim 18, wherein the data identifying a plurality of selected items is generated from a user-configured favorites list, and wherein the method further comprises, removing an individual item from the user-configured favorites list if the availability information indicates that the individual item is not available.

20. The method of Claim 14, wherein the wireless device is a mobile phone having components for displaying an image of the mapping data.

21. A computer-readable medium containing computer-readable instructions which, when executed by a computer, performs the method of Claim 14.

22. A computer-controlled system for performing the method of Claim 14.
